# EUROPEAN PATENT APPLICATION

(11) **EP 4 835 437 A1**
(43) Date of publication of application: **04.11.2026**
(21) Application number: 25866554.6
(22) Date of filing: 12.09.2025
(51) Int. Cl.: G01N 15/02, G06F 17/10, H01M 4/36, H01M 4/525, H01M 4/505, H01M 4/02

(54) **METHOD FOR PREDICTING ELECTRODE PRESS LOAD**

(30) Priority: 13.09.2024 KR 20240126153
(71) Applicant: LG Energy Solution, Ltd., Seoul 07335 (KR)
(72) Inventor: LEE, Jeayoung, Daejeon 34122 (KR); HAN, Gi Beom, Daejeon 34122 (KR); LEE, Youshin, Daejeon 34122 (KR); KIM, Minjeong, Daejeon 34122 (KR); PARK, Hyunyoung, Daejeon 34122 (KR); PARK, Sin Young, Daejeon 34122 (KR); LIM, Hyungwoo, Daejeon 34122 (KR); JEONG, Yeaji, Daejeon 34122 (KR)
(74) Representative: Hoffmann Eitle
(86) International application number: PCT/KR2025/014265
(87) International publication number: WO 2026/059382

(57) **Abstract**

The present disclosure provides a method for predicting an electrode press load, comprising the steps of: measuring the roundness (r) of large particles contained in a positive electrode active material; and predicting the press load of an electrode using the measured roundness (r) of the large particles.

## Description

### TECHNICAL FIELD

### Cross Citation with Related Application(s)

This application claims priority to and the benefit of Korean Patent Application No. 10-2024-0126153, filed on September 13, 2024, and Korean Patent Application No. 10-2025-0130704, filed on September 12, 2025, the disclosures of which are incorporated herein by reference in their entirety.

The present disclosure relates to a method for predicting the press load of an electrode for a secondary battery.

### BACKGROUND

Due to the rapid increase in the use of fossil fuels, the demand for the use of alternative energy or clean energy is increasing, and as a part thereof, the fields that are being studied most actively are the fields of power generation and power storage using electrochemistry.

Currently, a secondary battery is a representative example of an electrochemical device that utilizes such electrochemical energy, and the range of use thereof tends to be gradually expanding.

Recently, with the increase of the technological development and demand for mobile devices such as portable computers, portable phones, and cameras, demand for secondary batteries as an energy source rapidly increases. Among such secondary batteries, many studies have been conducted on a lithium secondary battery that exhibits high charging/discharging characteristics, has a long cycle life, and is eco-friendly, and has been commercialized and widely used.

The lithium secondary battery generally consists of a positive electrode, a negative electrode, a separator and an electrolyte. The positive electrode and the negative electrode include active materials capable of intercalation and deintercalation of lithium ions.

As a positive electrode active material for lithium secondary batteries, lithium cobalt oxide (LiCoO₂), lithium nickel oxide (LiNiO₂), lithium manganese oxide (LiMnO₂ or LiMnO₄, etc.), lithium iron phosphate compound (LiFePO₄), and the like have been used. Among these, lithium cobalt oxide has the advantage of high operating voltage and excellent capacity characteristics, but the price of cobalt, which is a raw material, is high and its supply is unstable, which makes it difficult to apply it commercially to large-capacity batteries. Lithium nickel oxide has poor structural stability, which makes it difficult to achieve sufficient life characteristics. On the other hand, spinel-structured lithium manganese oxides have excellent stability, but has the problem that capacity characteristics deteriorate. Thus, lithium composite transition metal oxides containing two or more types of transition metals have been developed and used in order to compensate for the problems of lithium transition metal oxides containing Ni, Co, or Mn alone. Among these, as it has become known that oxides containing excessive lithium and having a higher Mn content than that of other metals except lithium (hereinafter referred to as "lithium-rich manganese-based oxide") can secure high energy density as high-capacity active materials, research and interest in this field are increasing significantly.

However, the lithium-rich manganese-based oxide has a low density, which causes the problem of being low in electrode density when applied to electrodes. To address this problem, various methods are being studied to increase the pressing density while reducing the press load. In particular, there is an urgent need for technology development of methods that can analyze factors having a correlation with the press load and predict the press load required to achieve a target electrode density on the analysis results.

### DETAILED DESCRIPTION OF THE INVENTION

### Technical Problem

It is an object of the present disclosure to provide a method for predicting the press load of an electrode from the roundness (r) of large particles contained in a positive electrode active material.

### Technical Solution

According to an aspect of the present disclosure, provided is a method for predicting an electrode press load, comprising the steps of: measuring the roundness (r) of large particles contained in a positive electrode active material; and predicting the press load of an electrode using the measured roundness (r) of the large particles.

### Advantageous Effects

The present disclosure relates to a method for predicting an electrode press load, wherein the press load when the internal porosity of the electrode reaches 15% to 35% can be predicted from the roundness (r) of the large particles contained in the positive electrode active material, even without actually performing and observing the pressing of the electrode.

### BRIEF DESCRIPTION OF THE DRAWINGS

Figure 1 shows photographs of Samples 1 ~ 6, which are large particle powder groups, taken with a scanning electron microscope.
Figure 2 is a diagram showing the press load of large particles according to the roundness (r) of large particles.
Figure 3 shows photographs of Samples a ~ e, which are small particle powder groups, taken with a scanning electron microscope.
Figure 4 is a diagram showing the press load of small particles according to the roundness of small particles.
Figure 5 is a diagram showing the press load (P) of large particles according to the roundness (r) of large particles in Samples A~F in which large particles and small particles are mixed.
Figure 6 is a diagram showing both the p value and the press load (P) according to the roundness (r) of the large particles in Samples A~F in which large particles and small particles are mixed.

### DETAILED DESCRIPTION OF THE EMBODIMENTS

Hereinafter, specific embodiments of the present disclosure will be described in more detail for promoting an understanding of the invention.

Terms or words used in the specification and the appended claims should not be construed as limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

The terminology used herein is merely used for the purpose of describing particular embodiments, and is not intended to be limiting of the present disclosure. The singular forms are intended to include the plural forms as well, unless the context clearly indicates otherwise.

It should be understood that the terms "comprises," "comprising," "includes," "including," "has," or "having," when used herein, specify the presence of stated features, integers, steps, components or combinations thereof, but do not preclude the presence or addition of one or more other features, integers, steps, components or combinations thereof.

As used herein, the term "primary particle" refers to a particle unit having no grain boundary in appearance when observed in the view at a magnification of 5,000 to 20,000 using a scanning electron microscope (SEM), and the term "secondary particle" refers to a particle formed by aggregation of several tens to several hundreds of primary particles. More specifically, a secondary particle is an aggregate of 40 primary particles or more.

As used herein, the term "particle" may include any one or all of a single particle, a pseudo-single particle, a primary particle, a nodule, and a secondary particle.

In the present disclosure, the "average particle diameter of the primary particle" may be calculated by magnifying the sample surface by 50,000 times to measure the particle diameter of the primary particle using a scanning electron microscope (e.g., JEOL JSM-7200F), and then calculating the arithmetic mean of the measured particle diameter data.

In the present disclosure, the "particle diameter (D₅₀) of the secondary particle" refers to a particle size corresponding to 50% of a volume cumulative particle size distribution of a positive electrode active material. The D₅₀ may be measured by using a laser diffraction method. For example, the D₅₀ can be measured by a process which includes dispersing a positive electrode active material powder in a dispersion medium, introducing it into a commercially available laser diffraction particle size measurement device (e.g., Malvern Mastersizer 3000), irradiating it with an ultrasonic wave of about 28 kHz with the output power of 60W to obtain a volume cumulative particle size distribution graph, and determining the particle size corresponding to 50% of cumulative volume.

In the present disclosure, the "internal porosity (%)" of the positive electrode active material powder refers to the percentage of pore volume within the active material powder group relative to the total volume of the active material powder group, and may be obtained by calculating the value of {(true density - actual density) / true density} × 100 of the active material powder group. For example, after a lithium-rich manganese-based oxide powder with a true density of 4.4 g/cc is placed in a cylindrical mold, the volume (0.974 cm³) is calculated using the bottom surface width of the cylindrical mold and the height of the filled powder, and the density (actual density, about 3.08 g/cc) is then calculated using the volume and mass (3g) of the powder. By substituting the actual density obtained from the above calculation and true density into the following Formula, it can be confirmed that the internal porosity is 30%.$Internal Porosity \left(%\right) = \left\{\left(True Density - Actual Density\right) / True Density\right\} \times 100$

In this case, the true density refers to the density when the particles are completely filled with particles, excluding the gaps between particles, and the actual density refers to the density of the active material powder group to be measured. The term "target density" used in the press load measurement process described below has the same meaning as the "actual density" defined above.

In addition, in the present disclosure, the "internal porosity" of the electrode may be measured by analyzing photographs of a cross-section of an electrode specimen taken at a magnification of 1,000 to 2,000 times using a scanning electron microscope (for example, JEOL JSM-7200F).

The true density may be measured at room temperature and atmospheric pressure using a gas pycnometer.

Below, specific embodiments of the present disclosure will be described in detail.

### Method for Predicting Electrode Press Load

In order to manufacture secondary batteries with excellent performance, it is necessary to increase the electrode density to a desired level through electrode pressing. In this case, the pressing characteristics of the active material powder are closely correlated with the pressing characteristics of the actual electrode, and the press load value for reaching the target density of the active material powder or the electrode containing the same varies depending on the type of the active material. Therefore, it is necessary to develop a method that can predict the press load of an electrode by utilizing the pressing characteristics of the active material.

In order to find out a method that can reduce the press load for reaching the target electrode density, the present inventors have mixed large-particle and small-particle positive electrode active materials and studied the relationship with the press load for such a bimodal active material using various methods. As a result, the inventors have found that the roundness of the small particles contained in the positive electrode active material had low relation with the press load of the positive electrode active material, while in the case of increasing the roundness of the large particles, there is a tendency for the press load of the positive electrode active material to be lower. Using this, the inventors have derived a relational formula that can predict the press load when the internal porosity of the positive electrode active material powder reaches a target internal porosity (z) in the range of 15% to 35% based on the roundness of the large particles. Through this relational formula, it was possible to predict the press load when the internal porosity of the electrode reaches the target internal porosity value of the positive electrode active material. The specific process for deriving the press load prediction method will be described later.

The method for predicting an electrode press load of the present disclosure comprises the steps of: measuring the roundness (r) of large particles contained in a positive electrode active material; and predicting the press load of an electrode using the measured roundness (r) of the large particles.

In an embodiment, the predicted press load of the electrode may comprise: substituting the measured roundness(r) of the large particles into the following Formula 1 to obtain a press load reference value(p) for the positive electrode active material powder; and predicting the press load of the electrode from the p value. Specifically, it is possible to obtain a press load reference value (p) for achieving the target internal porosity (z) of the positive electrode active material powder, and predict the press load of the electrode for achieving the same internal porosity therefrom. [Formula 1] $p \left(ton\right) = - 14 r + 17.3 + 0.5 \left(30-z\right)$ wherein in Formula 1,
r is the roundness of the large particles,
z is the target internal porosity of the positive electrode active material powder, and
p is a press load reference value for the positive electrode active material.

In this case, the z is in the range of 15 or more and 35 or less.

Formula 1 was derived by performing a regression analysis on the press load data when the internal porosity of the positive electrode active material powder reaches 30%, confirming the tendency that as the target internal porosity decreases by 1%, the press load for reaching this increases by 0.5 ton, and applying the result as an additional factor.

The regression analysis may be a regression analysis based on the roundness of large particles actually determined by the method described below and the values measuring the press load for the positive electrode active material powder containing such large particles.

In this case, the press load for the positive electrode active material powder may be a value obtained by setting a target density of the positive electrode active material powder and a pressing thickness for reaching the target density based on the true density and target internal porosity of the positive electrode active material powder, and measuring the pressing conditions while pressing so as to reach the target pressing thickness. In this process, the positive electrode active material powder is placed and pressed in a mold, and the pressing conditions including the press load when the pressing thickness is reached can be measured.

The target density of the positive electrode active material powder may be obtained from the following Formula 1B. [Formula 1B] 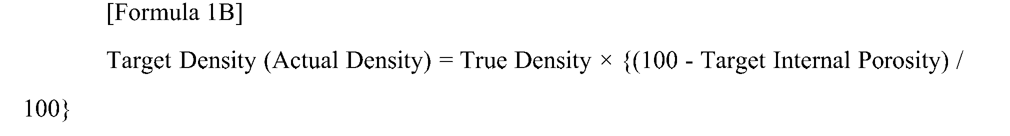 Target Density (Actual Density) = True Density × {(100 - Target Internal Porosity) / 100}

Also, the pressing thickness may be obtained from the following Formula 1C. [Formula 1C] 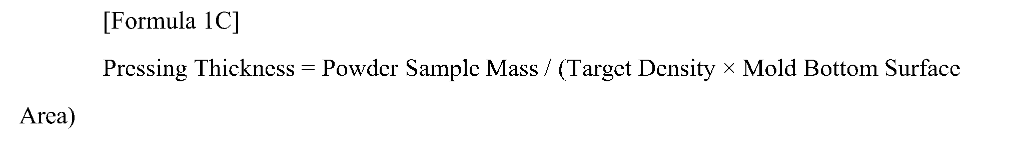 Pressing Thickness = Powder Sample Mass / (Target Density × Mold Bottom Surface Area)

In the present disclosure, the roundness (r) refers to a value obtained according to the following Formula 1A, and may be a value calculated based on 300 to 400 particles in an Image Analysis Management (IAM) analysis. [Formula 1A] $Roundness = \left(4\times Area\right) / \left(π\times {{D}_{max}}^{2}\right)$ wherein in Formula 1A,
Area refers to the area of the particle, and
Dₘₐₓ refers to the major axis length of the particle.

The area of the particle and the major axis length of the particle may be obtained using photographs taken with a scanning electron microscope. Specifically, after a positive electrode active material powder group is uniformly applied onto a substrate such as carbon tape, the positive electrode active material particles are photographed using a scanning electron microscope (e.g., JSM-7200F (JEOL)), and the area of the particle and the major axis length of the particle are calculated through IAM analysis. In this case, the area of the particle refers to the area of a planar particle seen in the photograph, and the major axis length of the particle refers to the length of the longest axis of the particle seen in the photograph.

In the present disclosure, the roundness of the large particle was measured by magnifying the sample surface by 1000 times using a scanning electron microscope (e.g., JSM-7200F, JEOL). The roundness of the small particles is measured by magnifying the sample surface by 2000 times using the same equipment.

In an embodiment of the present disclosure, the roundness (r) of the large particles may be 0.7 or more, specifically 0.7 to 1.0, and more specifically 0.8 to 1.0. When the roundness (r) of the large particles contained in the positive electrode satisfies the above range, it is possible to improve the density after pressing the positive electrode even when a low press load is applied.

According to an embodiment of the present disclosure, the press load of the positive electrode active material indicates a value predicting the press load when the internal porosity of the positive electrode active material powder reaches 15% to 35%, specifically 18% to 35%, and more specifically 20% to 35%. When the internal porosity of the positive electrode active material powder satisfies the above range, the cracking of the active material particles can be reduced, and excellent electrochemical properties can be exhibited.

Additionally, in an embodiment, the press load of the electrode indicates a value predicting the press load when the internal porosity of the electrode reaches 15% to 35%.

In an embodiment, the step of predicting the press load of the electrode may comprise: predicting the press load of the positive electrode active material from the p value; and predicting the press load of the electrode from the predicted press load of the positive electrode active material. Specifically, the press load (ton) for the positive electrode active material may be predicted to be ±1 (ton), specifically p±0.8 (ton), or more specifically p±0.7 (ton), of the press load reference value (p) for achieving the target internal porosity (z) of the positive electrode active material powder. On the other hand, the easier it is to press the active material powder, the more easily the actual electrode can be pressed, exhibiting a proportional correlation. Therefore, the press load of the electrode may be predicted from the press load of the positive electrode active material.

In an embodiment, the press load of the electrode may be predicted to be p±1 (ton), specifically p±0.8 (ton), and more specifically p±0.7 (ton). That is, the value that predicts the press load required for the positive electrode active material powder to reach a predetermined internal porosity (z), derived from Formula 1, and the value predicting the press load required for the electrode to reach the same internal porosity are proportionally correlated and may be predicted within the same range. In this way, it is possible to predict the press load of the electrode from the press load of the positive electrode active material.

According to another embodiment, the press load of the positive electrode active material predicted from the p value may be 4 tons to 9 tons, specifically 4 tons to 8.5 tons, and more specifically 4.5 tons to 8.5 tons. Furthermore, the predicted press load of the electrode may also be 4 tons to 9 tons, specifically 4 tons to 8.5 tons, or more specifically 4.5 tons to 8.5 tons. When an electrode is manufactured using a press load within the above range, it is possible to reduce the cracking of active material particles in the electrode and improve the lifetime of the electrode.

### Positive Electrode Active Material

The positive electrode active material is a bimodal positive electrode active material having a structure in which large particles and small particles are mixed. As the positive electrode active material has a structure in which large particles and small particles are mixed, it is possible to achieve a desired positive electrode active material density, thereby enabling the achievement of an appropriate pressing density for the positive electrode. A bimodal positive electrode active material refers to a mixture that exhibits a normal distribution with two peaks in a particle distribution diagram.

In an embodiment of the present disclosure, the small particles and large particles may each be secondary particles formed by aggregation of a plurality of primary particles.

In an embodiment of the present disclosure, the average particle diameter of the primary particles of the small particles may be 100 nm to 500 nm, and the average particle diameter (D₅₀) of the secondary particles may be 1 µm to 5 µm, specifically 2 µm to 5 µm, or more specifically 3 µm to 5 µm.

In an embodiment of the present disclosure, the average particle diameter of the primary particles of the large particles may be 100 nm to 500 nm, and the average particle diameter (D₅₀) of the secondary particles may be 8 µm to 12 µm, specifically 8 µm to 11 µm, and more specifically 9 µm to 11 µm.

Furthermore, since the positive electrode active materials of the large particles and small particles have an average particle diameter (D₅₀) within the above range, the positive electrode density after pressing can be appropriately achieved, and the capacity characteristics of the battery can be improved.

According to another embodiment, the large particles are included in an amount of more than 50% by weight, specifically 60% by weight to 100% by weight, and more specifically 65% by weight to 70% by weight, based on the total weight of the positive electrode active material.

Furthermore, according to an embodiment of the present disclosure, the large particles and small particles are each a lithium-rich manganese-based oxide represented by the following Formula 2.

[Formula 2] Liₐ[Ni_{b}Co_{c}Mn_{d}Mₑ]O₂

wherein in Formula 1, 1.0<a, 0≤b≤0.5, 0≤c≤0.1, 0.5≤d≤1.0, 0≤e≤0.2, and M is at least one selected from the group consisting of Al, B, W, Mg, V, Ti, Zn, Ga, In, Ru, Nb, Sn, Sr and Zr.

According to yet another embodiment, the lithium-rich manganese-based oxide has a structure in which a rock-salt phase lithium manganese oxide and a layered lithium transition metal oxide are mixed.

Meanwhile, the a is the molar ratio of Li in the lithium-rich manganese-based oxide, and may be 1.0<a, 1.1≤a≤1.5, or 1.12<a<1.18. If the a satisfies the above range, high-capacity characteristics and high energy density per unit volume can be achieved.

The b is the molar ratio of Ni in the lithium-rich manganese-based oxide, and may be 0≤b≤0.5, 0.1≤b≤0.4, or 0.24<b<0.36.

The c is the molar ratio of Co in the lithium-rich manganese-based oxide, and may be 0≤c≤0.1, 0≤c≤0.05, or 0<c<0.1. If the c exceeds 0.1, it is difficult to secure high capacity, and evolution of gas and deterioration of the positive electrode active material become intensified, which may result in a decrease in lifetime characteristics.

The d is the molar ratio of Mn in the lithium-rich manganese-based oxide, and may be 0.5≤d≤1.0, 0.5≤d≤0.80, or 0.5≤d<0.7. If the d is less than 0.5, the proportion of the rock-salt phase is too low, and thus, the effect of improving the capacity is minimal.

The e is the molar ratio of the additional element M in the lithium-rich manganese-based oxide, and may be 0≤e≤0.2, 0≤e≤0.1, or 0<e<0.05. If the content of the additional element is too high, it may adversely affect the capacity of the active material.

On the other hand, the lithium-rich manganese-based oxide may be, more specifically, represented by the following Formula 3:

[Formula 3] X Li₂MnO₃ · (1-X)Li[Ni_{1-y-z-w}Mn_{y}Co_{z}M_{w}]O₂

wherein in Formula 3, M is at least one selected from the group consisting of Al, B, W, Mg, V, Ti, Zn, Ga, In, Ru, Nb, Sn, Sr and Zr.

The X is the ratio of the rock-salt phase (Li₂MnO₃) in the lithium-rich manganese-based oxide, and may be 0.2≤X≤0.5, 0.25≤X≤0.5, or 0.25≤X≤0.4. If the ratio of the rock-salt phase (Li₂MnO₃) in the lithium-rich manganese-based oxide satisfies the above range, high-capacity characteristics can be achieved.

The y is the molar ratio of Mn in the layered phase (LiM'O₂), and may be 0.4≤y<1, 0.4≤y≤0.8, or 0.4≤y≤0.7.

The z is the molar ratio of Co in the layered phase (LiM'O₂), and may be 0≤z≤0.1, 0≤z≤0.08, or 0≤z≤0.05. If the z exceeds 0.1, evolution of gas and deterioration of the positive electrode active material become intensified, which may result in a decrease in lifetime characteristics.

The w is the molar ratio of the additional element M in the layered phase (LiM'O₂), and may be 0≤w≤0.2, 0≤w≤0.1, or 0≤w≤0.05.

Below, the specific process by which the present inventors have derived the method for predicting the press load of an electrode, as well as an experimental example to which the prediction method of the present disclosure is applied will be described in detail.

### Derivation Process of Press Load Prediction Method

### 1. Confirmation of Correlation Between Roundness of Large Particles and Press Load

### (1) Measurement of Roundness and press Load of Large Particles

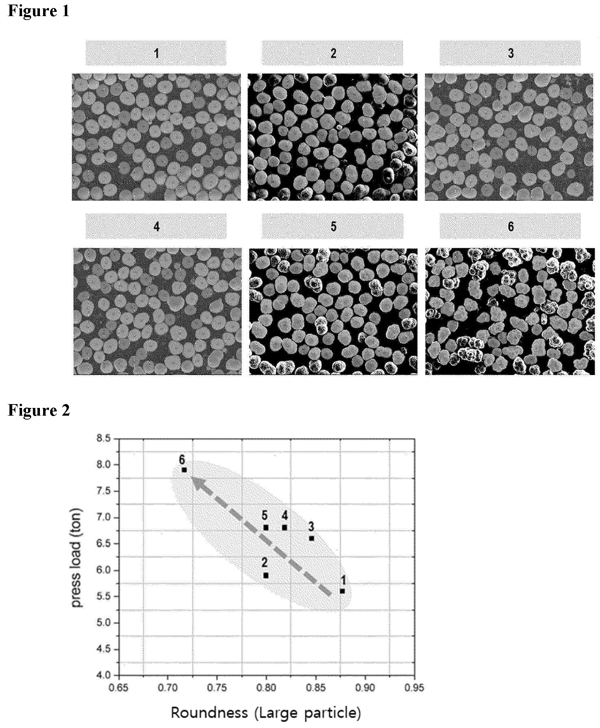

The powder groups of Samples 1 ~ 6, containing only large particles, were uniformly coated onto a carbon tape, and then photographs of the powder particles were taken using a scanning electron microscope (JEOL, JSM-7200F). The photographs taken are shown in Figure 1. The photographs were analyzed by IAM, and the average particle diameter (D₅₀) and roundness (r) of the powder groups of Samples 1 ~ 6 were measured and listed in Table 1 below.

Additionally, the powder groups of Samples 1 ~ 6 were each placed in a cylindrical mold. The true density (g/cc) of each sample was used to calculate the target density (actual density) for achieving an internal porosity of about 30%. The target density, sample mass, and bottom surface area of the cylindrical mold were then used to set a pressing thickness required to achieve an internal porosity of about 30% (target internal porosity). The press load measured while pressing to the set pressing thickness is listed in Table 1.$Internal Porosity \left(%\right) = \left\{\left(True Density - Actual Density\right) / True Density\right\} \times 100$ 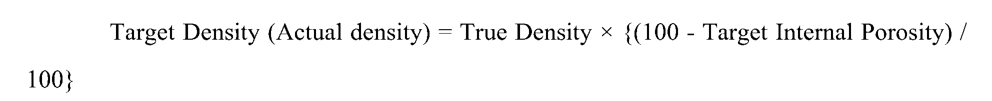 Target Density (Actual density) = True Density × {(100 - Target Internal Porosity) / 100} 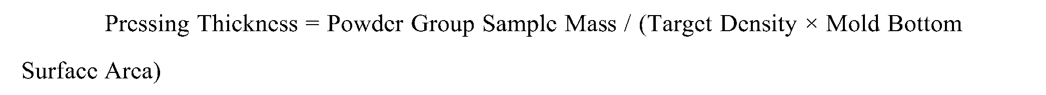 Pressing Thickness = Powder Group Sample Mass / (Target Density × Mold Bottom Surface Area)

Further, a graph of the press load for large particles according to the roundness (r) of the large particles is shown in Figure 2.

**Table 1]**

| Sample | Composition (ICP) | Average diameter (D₅₀) | Roundness of large particle (r) | press load of large particle |
|---|---|---|---|---|
| 1 | Li_{1.14}Mn_{0.55}Ni_{0.31}O₂ | 9.34 | 0.877 | 5.6 |
| 2 | Li_{1.16}Mn_{0.54}Ni_{0.30}O₂ | 9.3 | 0.80 | 5.9 |
| 3 | Li_{1.16}Mn_{0.54}Ni_{0.30}O₂ | 9.33 | 0.846 | 6.6 |
| 4 | Li_{1.16}Mn_{0.54}Ni_{0.30}O₂ | 9.31 | 0.819 | 6.8 |
| 5 | Li_{1.15}Mn_{0.55}Ni_{0.30}O₂ | 10.2 | 0.80 | 6.8 |
| 6 | Li_{1.15}Mn_{0.55}Ni_{0.30}O₂ | 10.4 | 0.717 | 7.9 |

Referring to Table 1 and Figure 2, it can be confirmed that the press load tends to decrease as the roundness of large particles increases.

### (2) Measurement of the roundness and press load of small particles

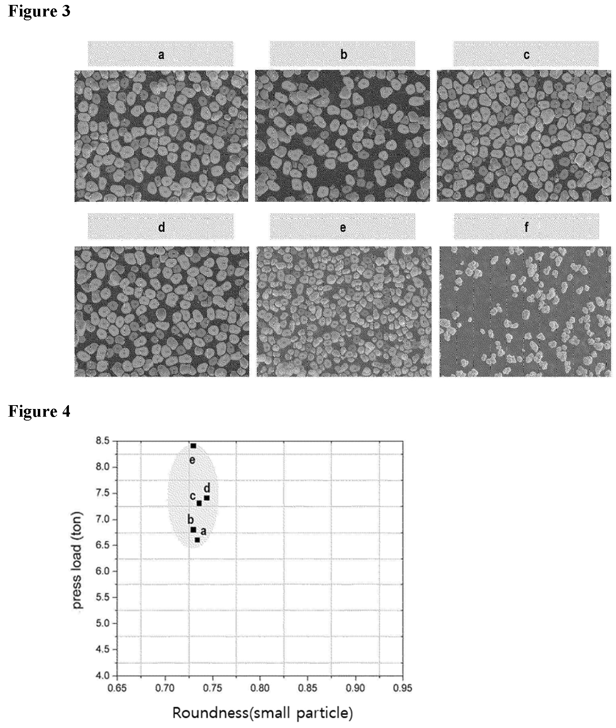

The powder groups of Samples a ~ f, containing only small particles, were uniformly coated onto a carbon tape, and then photographs of the powder particles were taken using a scanning electron microscope (JEOL, JSM-7200F). The photographs taken are shown in Figure 3. The photographs were analyzed by IAM, and the average particle diameter (D₅₀) and roundness (r) of the powder groups of Samples a ~ f were measured and listed in Table 2 below. At this time, the particle shape of the powder group of Sample f was very irregular, making it difficult to confirm the shape of the small particles from the photograph. As a result, it was impossible to measure the roundness, and this is listed as "unmeasurable" in Table 2.

In addition, the press load of the powder groups of Samples a ~ f was measured using the same method as for Samples 1 ~ 6, and is listed in Table 2 below. A graph of the press load of small particles according to the roundness of small particles is shown in Figure 4.

**[Table 2]**

| Sample | Composition (ICP) | Average diameter (D₅₀) | Roundness of small particle | press load of small particle |
|---|---|---|---|---|
| a | Li_{1.14}Mn_{0.55}Ni_{0.31}O₂ | 3.68 | 0.734 | 6.6 |
| b | Li_{1.16}Mn_{0.54}Ni_{0.30}O₂ | 3.61 | 0.730 | 6.8 |
| c | Li_{1.16}Mn_{0.54}Ni_{0.30}O₂ | 3.62 | 0.736 | 7.3 |
| d | Li_{1.15}Mn_{0.54}Ni_{0.31}O₂ | 3.58 | 0.744 | 7.4 |
| e | Li_{1.15}Mn_{0.55}Ni_{0.30}O₂ | 2.8 | 0.730 | 8.4 |
| f | Li_{1.15}Mn_{0.55}Ni_{0.30}O₂ | 2.9 | Unmeasurable | 9.9 |

From Table 2 and Figure 4, it can be confirmed that it is difficult to grasp a tendency between the roundness of small particles and the press load.

Through the above process, it was confirmed that the roundness of large particles has a significant effect on the press load. Based on this, it was predicted that the roundness of large particles would have a significant effect on the press load, even in mixtures of large and small particles. Therefore, mixed samples of large particles and small particles were prepared to determine the correlation between the roundness of large particles and the press load of the mixed samples.

### 2. Derivation of the relational formula (Formula 1) between the roundness (r) of large particles and the press load reference value (p) of the positive electrode active material

### (1) Preparation of large and small particle mixed samples A ~ F and measurement of press load

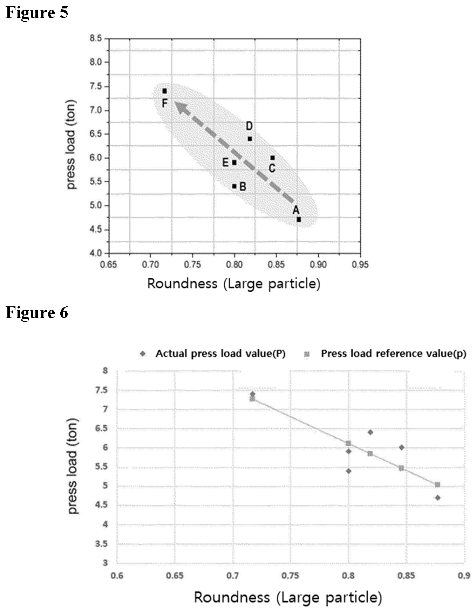

The large particles and small particles listed in Table 3 below were mixed in a weight ratio of 65:35 to prepare Samples A ~ F. The press load (P) of the powder groups of Samples A ~ F was measured using the same method as that used for the large particle powder samples 1 ~ 6, and is listed in Table 3 below. A graph of the press load (P) according to the roundness of the large particles of Samples A ~ F is shown in Figure 5.

**[Table 3]**

| Sample | Mixing | P (ton) |
|---|---|---|
| A | Sample 1 + Sample a | 4.7 |
| B | Sample 2 + Sample b | 5.4 |
| C | Sample 3 + Sample c | 6 |
| D | Sample 4 + Sample d | 6.4 |
| E | Sample 5 + Sample e | 5.9 |
| F | Sample 6 + Sample f | 7.4 |

From Table 3 and Figure 5, it can be confirmed that as predicted in the previous process, as the roundness of the large particles increased, the press load (P) when the internal porosity reached about 30% tends to decrease.

### (2) Derivation of Relational Formula (Formula 1)

The graph in Figure 5 was subjected to a regression analysis, and the internal porosity of the target active material powder was applied as an additional factor to derive a relational formula (Formula 1 below) between the roundness (r) of the large particles and the press load reference value (p) of the positive electrode active material. In addition, it was confirmed that the actually measured press load P was within a range of ±1 (ton) of the press load reference value p obtained from the relational formula. [Formula 1] $p \left(ton\right) = - 14 r + 17.3 + 0.5 \left(30-z\right)$ wherein in Formula 1,
r is the roundness of the large particles,
z is the target internal porosity of the positive electrode active material powder, and
p is a press load reference value for the positive electrode active material.

### 3. Comparison of the predicted values using the derived relational formula (Formula 1) with the actual press load (P)

The roundness values of large particles contained in Samples A ~ F were substituted into Formula 1 to obtain the p value, and the predicted press load values and the actual press load (P) when the internal porosity of Samples A ~ F reached about 30% were measured, and shown in Table 4 below. The p value and actual press load (P) according to the roundness (r) of the large particles are shown in Figure 6. The p values in Table 4 have been rounded to third decimal places.

**[Table 4]**

| Sample | p (ton) | Predicted value (ton) | P (ton) |
|---|---|---|---|
| A | 5.02 | 4.02~6.02 | 4.7 |
| B | 6.10 | 5.10~7.10 | 5.4 |
| C | 5.46 | 4.46~6.46 | 6 |
| D | 5.83 | 4.83~6.83 | 6.4 |
| E | 6.10 | 5.10~7.10 | 5.9 |
| F | 7.26 | 6.26~8.26 | 7.4 |

Referring to Table 4 and Figure 6, it was confirmed that the actual press load value (P) of the positive electrode active material powder was within the range of predicted values from the value (p) obtained by substituting the roundness (r) of large particles into Formula 1. This demonstrates that the press load of the positive electrode active material powder can be predicted from the roundness of large particles. Furthermore, it may also be possible to predict the press load of the electrode, which has a proportional correlation with the press load of the positive electrode active material powder. That is, it was confirmed that the press load of the electrode can be predicted through the roundness of large particles even without actually performing the pressing.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

## Claims

1. A method for predicting an electrode press load, comprising the steps of:
measuring the roundness (r) of large particles contained in a positive electrode active material; and
predicting the press load of an electrode using the measured roundness (r) of the large particles.

2. The method for predicting an electrode press load according to claim 1,
wherein the predicted press load of the electrode comprises: substituting the measured roundness(r) of the large particles into the following Formula 1 to obtain a press load reference value(p) for the positive electrode active material powder; and
predicting the press load of the electrode from the p value. $p \left(ton\right) = - 14 r + 17.3 + 0.5 \left(30-z\right)$
wherein in Formula 1,
r is the roundness of the large particles,
z is the target internal porosity of the positive electrode active material powder, and
p is a press load reference value for the positive electrode active material.

3. The method for predicting an electrode press load according to claim 2,
wherein the step of predicting the press load of the electrode comprises: predicting the press load of the positive electrode active material from the p value; and predicting the press load of the electrode from the predicted press load of the positive electrode active material.

4. The method for predicting an electrode press load according to claim 3,
wherein the press load of the positive electrode active material is predicted to be p±1 (ton).

5. The method for predicting an electrode press load according to claim 3,
wherein the press load of the positive electrode active material predicted from the p value is 4 to 9 tons.

6. The method for predicting an electrode press load according to claim 3,
wherein the press load of the positive electrode active material indicates a value predicting the press load when the internal porosity of the positive electrode active material powder reaches 15% to 35%.

7. The method for predicting an electrode press load according to claim 1,
wherein the press load of the electrode is a value predicting the press load when the internal porosity of the electrode reaches 15% to 35%.

8. The method for predicting an electrode press load according to claim 1,
wherein the positive electrode active material is a bimodal positive electrode active material having a structure in which large particles and small particles are mixed.

9. The method for predicting an electrode press load according to claim 8,
wherein the large particles have an average particle diameter (D₅₀) of 8µm to 12µm, and the small particles have an average particle diameter (D₅₀) of 1µm to 5µm.

10. The method for predicting an electrode press load according to claim 8,
wherein the large particles are included in an amount of more than 50% by weight based on the total weight of the positive electrode active material.

11. The method for predicting an electrode press load according to claim 8,
wherein the large particles and small particles are lithium-rich manganese-based oxides represented by the following Formula 2.
[Formula 2] Liₐ[Ni_{b}Co_{c}Mn_{d}Mₑ]O₂
wherein in Formula 1, 1.0<a, 0≤b≤0.5, 0≤c≤0.1, 0.5≤d≤1.0, 0≤e≤0.2, and M is at least one selected from the group consisting of Al, B, W, Mg, V, Ti, Zn, Ga, In, Ru, Nb, Sn, Sr and Zr.
